# EUROPEAN PATENT SPECIFICATION

(11) **EP 1 934 276 B1**
(45) Date of publication and mention of the grant of the patent: **25.01.2012**
(21) Application number: 06803612.8
(22) Date of filing: 15.09.2006
(51) Int. Cl.: C08K 3/22, C08K 5/05

(54) **FLAME-RETARDANT COATING**
FLAMMWIDRIGE BESCHICHTUNG
REVETEMENT IGNIFUGE

(30) Priority: 15.09.2005 US 716938 P
(43) Date of publication of application: 25.06.2008
(73) Proprietor: Rutgers, The State University, New Brunswick, NJ 08909 (US)
(72) Inventor: NOSKER, Thomas, Stockton, NJ 08559 (US); MAZAR, Mark, Piscataway, NJ 08854 (US); NOSKER, Patrick, Stockton, NJ 08559 (US); LYNCH, Jennifer, K., Franklin Park, NJ 08823 (US)
(74) Representative: Schmidt, Karsten
(86) International application number: PCT/US2006/035861
(87) International publication number: WO 2007/035421

(56) References cited:
- WO-A-2006/130193
- US-A- 3 560 253
- US-A- 3 560 253
- US-A1- 2004 002 559
- US-A1- 2004 002 559
- US-A1- 2006 281 831
- HAWLEY: 'The Condensed Chemical Dictionary', vol. 10TH ED., 1981 page 27, XP008130787

## Description

### CROSS REFERENCE TO RELATED APPLICATIONS

This application claims priority to U.S. Provisional Application Serial No. 60/716,938, which was filed on September 15, 2005, the disclosure of which is incorporated herein by reference.

### BACKGROUND OF THE INVENTION

In the past, fire proofing plastic involved embedding flame-retardant particles directly into the resin matrix. The technique is fine for materials which are not meant to bear load. However, the amount of flame-retardant particles needed to be effective in higher mass objects, for example plastic lumber, is too high. Disruption of the networks within a plastic significantly affects the strength and elastic modulus. Therefore, embedded particles are suitable for thinner products, for example casings for electronics and dash boards for cars. However, for structural applications of plastic a different approach must be considered to reduce the threat of fire.

Because fire is a surface phenomenon, coatings that sufficiently adjust a surface's characteristics in favor of fire resistance are important. Because the coating represents the only barrier between the plastic fuel and a possible fire source, it must remain effective throughout the fire; delaying ignition of the plastic; and hindering propagation.

### SUMMARY OF THE INVENTION

The present invention is directed to a flame-retardant coating layer, which includes a cross-linked thermosetting polymer and a metal hydroxide. A precursor composition for use in preparing the flame-retardant coating is also presented, wherein the precursor composition includes a cross-linked thermosetting polymer varnish, a metal hydroxide, an alcohol, and water. A method for coating an article with a flame-retardant coating layer and articles incorporating the flame-retardant coating are also presented.

### BRIEF DESCRIPTION OF THE DRAWINGS

FIG. 1 shows an article following coating application;

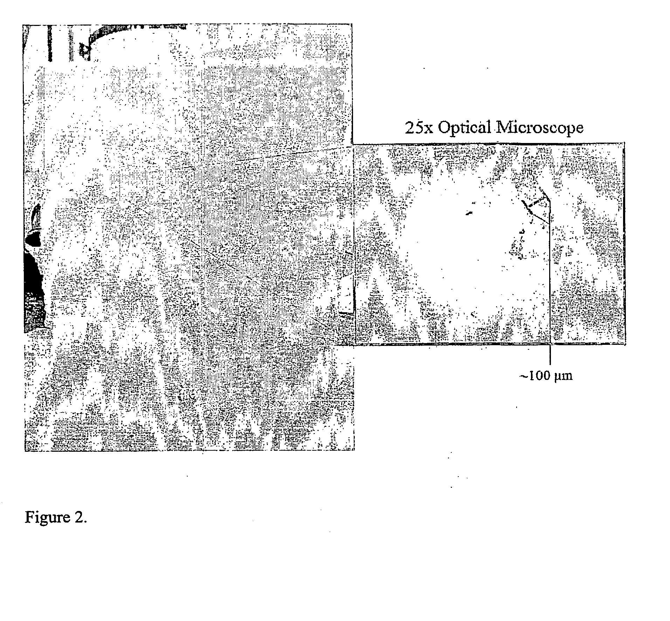

FIG. 2 provides an enlarged view of the coated article after drying; and
FIG. 3 shows the coated article following a flame test.

### DETAILED DESCRIPTION OF THE INVENTION

The cross-linked thermosetting polymer can be applied in its cross-linked state or cross-linked after application upon exposure to ambient conditions of light (visible or UV), heat, oxygen, or moisture. Cross-linked polymers useful in the present invention are capable of being loaded with at least one metal hydroxide. Examples of suitable polymers include polyurethanes, alkyd polyesters, cross-linked polyacrylates, and the like.

The composition of the present invention is formulated by combining at least one metal hydroxide, alcohol, and water with a varnish solution of the polymer. The term "varnish" is defined according to its well-understood meaning as a combination of a drying oil, resin (e.g. the cross-linked thermosetting polymer) and a solvent. The solvent base of the varnish used in the present invention is preferably non-aqueous. A preferred amount of varnish in the precursor composition is from about 25% to about 35% by weight of the total composition. A preferred amount of polymer in the final coating is from about 40% to about 60% by weight of the final coating.

Suitable metal hydroxides for inclusion in the polymer are those capable of providing a flame-retardant effect. For example, magnesium hydroxide (Mg(OH)₂) is a non-toxic flame retardant whose decomposition is endothermic and follows the reaction below:

Mg(OH)₂ → MgO + H₂O

ΔH= -1372.35 joules (1.30 BTU) per gram
T_{c}= 330 °C

The products of decomposition are non-toxic. Further, both magnesium hydroxide and magnesium oxide are alkaline, which can reduce acidic, corrosive gas emissions from a substrate coated with the composition of the present invention. Water, produced by the decomposition, has the potential to change to steam: absorbing 2259.36 joules (2.14 BTU) per gram at 100°C. The steam interferes with oxygen gas, displacing it and reducing flammability. Additionally, the magnesium oxide ceramic acts as a thermal barrier, blocking and deflecting heat and flame from penetrating to the substrate below the coating. Aluminum hydroxide (Al(OH)₂) behaves in the same manner. Therefore, preferred metal hydroxides include Mg(OH)₂ and Al(OH)₂. A preferred amount of metal hydroxide in the precursor composition is from about 25% to about 35% by weight of the total composition. A preferred amount of metal hydroxide in the final coating is from about 40% to about 60% by weight of the final coating.

Alcohol useful in the present invention includes, for example, isopropyl alcohol, 2-propanol, and the like. A preferred amount of alcohol in the precursor composition is from about 20% to about 30% by weight of the total composition.

Alternatively, regular over-the-counter rubbing alcohol (70% 2-propanol by volume) can also be used as long as one takes the water content into account by quantifying the amount of water in the alcohol solution. If necessary, water is added to the precursor composition in addition to the water contributed by the alcohol solution. Similarly, magnesium hydroxide may be used in slurry form just so long as one determines the water content of the slurry and adds any necessary additional water to the precursor composition. The total water content of the precursor composition, including water contributed by an alcohol solution and/or a magnesium oxide slurry, is from about 15% to about 25% by weight of the total composition.

Due to the viscosity of the mixture, heavy duty mixing equipment may be used to achieve a homogeneous state. In one embodiment, a hammer drill is used in conjunction with a dual bladed agitator designed to blend paint and drywall mud.

Another aspect of the current invention includes an article, wherein at least a portion is coated with a composition, which includes a cross-linked thermosetting polymer and a metal hydroxide. Another embodiment includes an article, wherein at least a portion is coated with a composition, which includes a cross-linked thermosetting polymer, a metal hydroxide, an alcohol, and water.

Suitable substrates for the coated article include, for example, thermoplastics, thermoplastic composites, polyethylene, wood, stone, metal, ceramics, and the like. Preferred substrates include thermoplastics and thermoplastic composites. For example, U.S. Patent Nos. 6,191,228, 5,951,940, 5,916,932, 5,789,477, and 5,298,214 disclose structural recycled plastic lumber composites made from post-consumer and post-industrial plastics, in which polyolefins are blended with polystyrene or a thermoplastic coated fiber material such as fiberglass. The disclosures of all five patents are incorporated herein by reference.

The coated article can have any shape or form, for example, a round cross-section, a rectangular cross-section, an hourglass cross-section, a sheet form, or a combination thereof. Exemplary forms for plastic composites are disclosed in U.S. Application No. 60/486,205 filed July 8, 2003, U.S. Application No. 60/683,115 filed May19, 2005, U.S. Application No. 10/563,883 filed January 9, 2006, and International Application No. PCT/US06/19311 filed May 19, 2006. The disclosures of all of which are incorporated herein by reference. In one embodiment, the article is an L-Beam, I-Beam, a C-Beam, a T-Beam, or a combination thereof.

Exemplary articles suitable for coating with the composition of the present invention include, but are not limited to, railroad ties, plastic piping, lumber, sheet piling, boat hulls, pick-up truck beds, and gasoline canisters.

Another embodiment includes a method for coating an article with a flame-retardant coating layer, which includes combining a metal hydroxide with a cross-linked thermosetting polymer varnish to form a mixture; combining water and an alcohol to form a solution; combining the mixture with the solution to form a coating precursor composition; and applying the composition to at least a portion of the article surface to form a coating layer, so that the coating layer develops cracks after drying. One embodiment includes a coated article prepared according to this method.

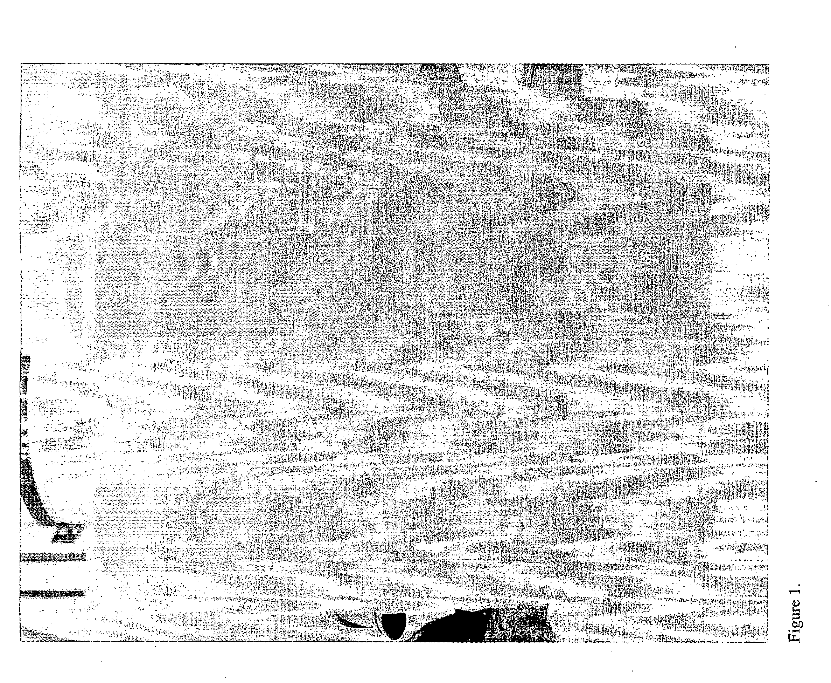

In a preferred embodiment, the coating is applied to the article by spraying. Spraying equipment having high suction is preferable. When applying the coating, an even layer is not critical but the coating should be thick enough to obstruct vision of the underlying surface. Spraying creates a rough texture with random features of varying thickness which promotes crack formation during drying. (FIG. 1) This eliminates any chance of significant spalling; rather, small regions of coating form, due to cracking, and remain local to their initial sub-melt temperature positions, extending the retardant's effectiveness.

The coating shown in FIG. 1 is relatively even, but the crater-like topology of the surface is evident. During drying, the polymer adheres to the substrate, which anchors it. Because much of the coating is made up of volatiles, shrinkage is substantial. The texture of the surface in combination with the coating's bond to the substrate causes cracking, which leads to the formation of "thermoset plates" or islands containing the flame-retardant composition.

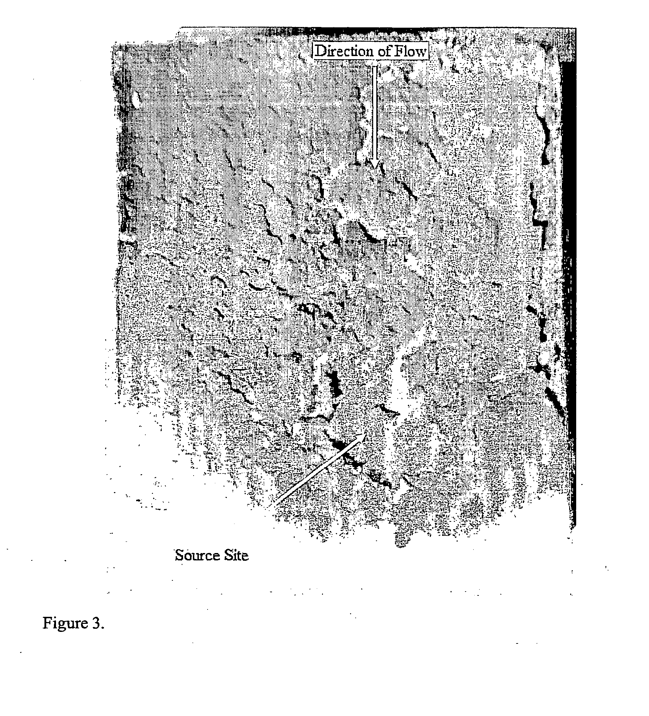

In addition, coated plastic with vertical orientation receives an added benefit: flame and heat, traveling up due to buoyant force, cause the plastic above the source to melt, which then flows down due to gravity and carries the flame retardant towards the source; thereby actively suppressing and extinguishing the fire. Surface tension prevents the thermoset plates, which resemble continents, from separating from the hot liquid plastic, allowing it to "float" on the surface. (FIG. 3). Following exposure to a flame, the majority of the coating islands remain in their initial positions. (FIG. 3). Had the article in FIG. 3 not been coated, the entire front face would have dripped from the substrate by the test's end. It should be noted that situations involving a flame traveling up along a vertical surface represent the worst case scenario. This specific case is actively suppressed just by the nature of the coating.

The following non-limiting examples set forth herein below illustrate certain aspects of the invention.

### EXAMPLES

Example 1 - Coating Preparation Using Magnesium Hydroxide Slurry Isopropyl alcohol (70% isopropyl alcohol by volume), magnesium hydroxide slurry (Flomag® H, Martin Marietta Magnesia Specialties Inc., Baltimore, MD), and polyurethane varnish (Minwax® Fast-Drying Polyurethane, Sherwin-Williams Co., Cleveland, OH) are mixed in a ratio of 1:1:1 by volume. To insure that the polyurethane does not cure prematurely, the isopropyl alcohol and magnesium hydroxide slurry are mixed and kept separately until needed.

Example 2 - Coating Preparation Using Magnesium Hydroxide Powder Polyurethane varnish is first measured out and mixed. Magnesium hydroxide powder is added during mixing. Next, water (7.8% by weight of composition) and 70% isopropyl alcohol by volume (34.7% by weight of composition) are separately combined. In the third step, the liquid prepared in step two is added to the polyurethane varnish/Mg(OH)₂ mixture of step one. The mass percents of the components can be found in Table 1.

**Table 1.**

| Component | Percent by Weight of Total Composition |
|---|---|
| Isopropyl alcohol (70% v/v) (24.3% alcohol; 10.4% water) | 24.3% |
| Polyurethane varnish | 27.8% |
| Magnesium hydroxide powder | 29.7% |
| Water (7.8% + 10.4% from alcohol solution) | 18.2% |

### Example 3 - Coated Composite Plastic Plank

A six-inch square composite plastic plank was coated with the composition prepared in Example 2. A propane torch was applied to the coated plastic and to an uncoated control plastic for two minutes such that the one-inch inner cone of the flame just reached each sample's surface. Brief removal of the torch, in thirty-second intervals, was used to determine whether each sample's surface had achieved self-sustaining combustion.

Coating a sample with the composition of Example 2 prolongs the time it takes to achieve self-sustaining combustion (Table 2).

**Table 2.**

| Time (s) | Uncoated | Coated |
|---|---|---|
| 30 | N | N |
| 60 | Y | N |
| 90 | Y | N |
| 120 | Y | Y |

| | | |
|---|---|---|
| Y or N: Indicates self-sustaining combustion | | |

### Example 4 - Coated Plastic Railroad Ties

An oxy-acetylene torch was aimed at the bottom corner of a plastic composite railroad tie. Two types of plastic composite railroad ties were used: TieTek™ Tie (TieTek, Marshall, TX) and (2) 32% polystyrene/68% polyethylene railroad tie ("Poly"). Four of each type of railroad tie were prepared for fire testing, two coated and two uncoated, and assembled into three test groups as indicated below in Table 4.

Application of the torch was attempted in the following time increments: 20, 35, 60, 120, and 300 seconds. However, because of malfunctioning torches and rain, only a portion of the total tests were conducted. After each interval, the torch was removed and the ties were allowed some time in order to determine whether they would self-extinguish. If they did, the time of this occurrence was recorded. If they did not, the time they were extinguished with water was recorded. The results are listed below in Table 4:

**Table 4.**

| | Flame Application Duration (sec.) | | 20 | 35 | 60 | 120 | 300 |
|---|---|---|---|---|---|---|---|
| Test | Tie | Treatment Product | Flame Out Time (sec.) | | | | |
| A | TieTek™ | None | 0 | 2 | 200 | 270 | 245 |
| | Poly | None | Ext | Ext | Ext | Ext | Ext |
| | | | | | | | |
| B | TieTek™ | None | # | # | # | # | # |
| | TieTek™ | FxP1 | # | # | # | # | 75(285) |
| | TieTek™ | Example 2 | # | # | # | # | 6(260) |
| | | | | | | | |
| C | Poly | None | 0 | 68 | Ext | Ext | Ext |
| | Poly | FxP1 | 0 | Ext | Ext | Ext | Ext |
| | Poly | Example 2 | 0 | 13 | Ext | Ext | Ext(215) |

| | | | | | | | |
|---|---|---|---|---|---|---|---|
| # - Indicates that the test was not conducted Ext - Indicates that the fire was extinguished with water (time) - Indicates the torch malfunctioned and the time the flame was prematurely removed FxP1 - Indicates a proprietary aircraft manufacturer's coating | | | | | | | |

### Discussion

Tests conducted in Examples 3 and 4 indicate that the flame retardant coating wards off the development of self-sustaining combustion. Furthermore, the 35 second test on the Poly ties shows that the ties coated with the composition of Example 2 self-extinguished while the Fx P1 coated tie had to be put out with water. Reinforcing this point, the 300 second test on TieTek™ ties shows the ties coated with the composition of Example 2 self-extinguishing a mere 6 seconds after the torch was removed while the tie coated with Fx P1 took 75 seconds to self extinguish.

The foregoing examples and description of the preferred embodiments should be taken as illustrating, rather than as limiting the present invention as defined by the claims. As will be readily appreciated, numerous variations and combinations of the features set forth above can be utilized without departing from the present invention as set forth in the claims. Such variations are not regarded as a departure from the spirit and script of the invention, and all such variations are intended to be included within the scope of the following claims.

## Claims

1. A flame-retardant coating layer formed from a precursor composition comprising a mixture of a metal hydroxide and a cross-linked thermosetting polymer varnish combined with a solution of alcohol and water, said coating layer binding to a substrate and forming flame-retardant thermoset plates thereon.

2. The composition of claim 1, wherein said polymer in said polymer varnish is selected from the group consisting of polyurethane, alkyl polyester, and cross-linked polyacrylate.

3. The composition of claim 1, wherein said metal hydroxide is selected from the group consisting of Mg(OH)₂ and Al(OH)₃.

4. The composition of claim 1, wherein said polymer is present in an amount from about 40% to about 60% by weight of the coating layer.

5. The composition of claim 1, wherein said polymer varnish is present in an amount from about 25% to about 35% by weight of the composition.

6. The composition of claim 1, wherein said metal hydroxide is present in an amount from about 40% to about 60% by weight of the coating layer.

7. The composition of claim 2, wherein said metal hydroxide is present in an amount from about 25% to about 35% by weight of the composition.

8. An article comprising at least one surface coated with the coating layer of claim 1.

9. A method for coating an article with a flame-retardant coating layer of claim 1, said method comprising:
(a) combining a metal hydroxide with a cross-linked thermosetting polymer varnish to form a mixture;
(b) combining water and an alcohol to form a solution;
(c) combining the mixture of step (a) with the solution of step (b) to form a coating precursor composition; and
(d) applying the composition of step (c) to at least a portion of the article surface to form a coating layer, so that said coating layer develops cracks after drying.

10. A coated article prepared according to the method of claim 9.

11. The article of claim 8 or 10, wherein said article comprises a polymeric material in the form of an L-Beam, I-Beam, a C-Beam, a T-Beam, or a combination thereof.

12. The article of claim 8 or 10, wherein said polymeric material of said article comprises a thermoplastic composite.

13. The article of claim 10, wherein said article comprises a railroad tie.

14. The article of claim 8 or 10, wherein said article comprises plastic piping.

## Patentansprüche

1. Flammhemmer-Überzugsschicht, gebildet aus einer Vorläuferzusammensetzung, umfassend ein Gemisch von einem Metallhydroxid und einem vernetzten duroplastischen Polymerlack, kombiniert mit einer Lösung von Alkohol und Wasser, wobei die Überzugsschicht an ein Substrat bindet und darauf Flammhemmer-Duroplastplatten bildet.

2. Zusammensetzung gemäß Anspruch 1, wobei das Polymer in dem Polymerlack ausgewählt ist aus der Gruppe bestehend aus Polyurethan, Alkylpolyester und vernetztem Polyacrylat.

3. Zusammensetzung gemäß Anspruch 1, wobei das Metallhydroxid ausgewählt ist aus der Gruppe bestehend aus Mg(OH)₂ und Al(OH)₃.

4. Zusammensetzung gemäß Anspruch 1, wobei das Polymer in einer Menge von etwa 40 Gew.-% bis 60 Gew.-% der Überzugsschicht vorhanden ist.

5. Zusammensetzung gemäß Anspruch 1, wobei der Polymerlack in einer Menge von etwa 25 Gew.-% bis 35 Gew.-% der Zusammensetzung vorhanden ist.

6. Zusammensetzung gemäß Anspruch 1, wobei das Metallhydroxid in einer Menge von etwa 40 Gew.-% bis 60 Gew.-% der Überzugsschicht vorhanden ist.

7. Zusammensetzung gemäß Anspruch 2, wobei das Metallhydroxid in einer Menge von etwa 25 Gew.-% bis 35 Gew.-% der Zusammensetzung vorhanden ist.

8. Gegenstand, umfassend wenigstens eine Oberfläche, die mit der Überzugsschicht gemäß Anspruch 1 überzogen ist.

9. Verfahren zum Überziehen eines Gegenstands mit einer Flammhemmer-Überzugsschicht gemäß Anspruch 1, wobei das Verfahren umfasst:
(a) Kombinieren eines Metallhydroxids mit einem vernetzten duroplastischen Polymerlack, um ein Gemisch zu bilden;
(b) Kombinieren von Wasser und einem Alkohol, um eine Lösung zu bilden;
(c) Kombinieren des Gemischs aus Schritt (a) mit der Lösung aus Schritt (b), um eine Überzugs-Vorläuferzusammensetzung zu bilden; und
(d) Auftragen der Zusammensetzung aus Schritt (c) auf wenigstens einen Abschnitt der Oberfläche des Gegenstands, um eine Überzugsschicht zu bilden, so dass die Überzugsschicht nach dem Trocknen Risse entwickelt.

10. Überzogener Gegenstand, der gemäß dem Verfahren gemäß Anspruch 9 hergestellt ist.

11. Gegenstand gemäß Anspruch 8 oder 10, wobei der Gegenstand ein Polymermaterial in der Form eines L-Trägers, eines I-Trägers, eines C-Trägers, eines T-Trägers oder einer Kombination davon umfasst.

12. Gegenstand gemäß Anspruch 8 oder 10, wobei das Polymermaterial des Gegenstands einen thermoplastischen Komposit umfasst.

13. Gegenstand gemäß Anspruch 10, wobei der Gegenstand eine Eisenbahnschwelle umfasst.

14. Gegenstand gemäß Anspruch 8 oder 10, wobei der Gegenstand Kunststoffrohr umfasst.

## Revendications

1. Couche de revêtement ignifuge formée à partir d'une composition de précurseur comprenant un mélange d'un hydroxyde métallique et d'un vernis polymère thermodurcissable réticulé combiné avec une solution d'alcool et d'eau, ladite couche de revêtement se liant à un substrat et formant sur celui-ci des plaques ignifuges thermodurcies.

2. Composition selon la revendication 1, dans laquelle ledit polymère dans ledit vernis polymère est choisi dans le groupe constitué par un polyuréthane, un alkylpolyester et un polyacrylate réticulé.

3. Composition selon la revendication 1, dans laquelle ledit hydroxyde métallique est choisi dans le groupe constitué par Mg(OH)₂ et Al(OH)₃.

4. Composition selon la revendication 1, dans laquelle ledit polymère est présent dans une quantité d'environ 40 % à environ 60 % en poids de la couche de revêtement.

5. Composition selon la revendication 1, dans laquelle ledit vernis polymère est présent dans une quantité d'environ 25 % à environ 35 % en poids de la composition.

6. Composition selon la revendication 1, dans laquelle ledit hydroxyde métallique est présent dans une quantité d'environ 40 % à environ 60 % en poids de la couche de revêtement.

7. Composition selon la revendication 2, dans laquelle ledit hydroxyde métallique est présent dans une quantité d'environ 25 % à environ 35 % en poids de la composition.

8. Article comprenant au moins une surface revêtue avec la couche de revêtement de la revendication 1.

9. Procédé de revêtement d'un article avec une couche de revêtement ignifuge de la revendication 1, ledit procédé comprenant :
(a) la combinaison d'un hydroxyde métallique avec un vernis polymère thermodurcissable réticulé pour former un mélange ;
(b) la combinaison d'eau et d'un alcool pour former une solution ;
(c) la combinaison du mélange de l'étape (a) avec la solution de l'étape (b) pour former une composition de précurseur de revêtement ; et
(d) l'application de la composition de l'étape (c) à au moins une partie de la surface de l'article pour former une couche de revêtement, de telle sorte que ladite couche de revêtement développe des fissures après séchage.

10. Article revêtu préparé selon le procédé de la revendication 9.

11. Article selon la revendication 8 ou 10, ledit article comprenant un matériau polymère sous la forme d'une poutre en L, d'une poutre en I, d'une poutre en C, d'une poutre en T, ou d'une combinaison de celles-ci.

12. Article selon la revendication 8 ou 10, ledit matériau polymère dudit article comprenant un composite thermoplastique.

13. Article selon la revendication 10, ledit article comprenant une traverse de chemin de fer.

14. Article selon la revendication 8 ou 10, ledit article comprenant une canalisation en plastique.
